# EUROPÄISCHE PATENTSCHRIFT

(11) **EP 0 842 109 B1**
(45) Veröffentlichungstag und Bekanntmachung des Hinweises auf die Patenterteilung: **11.10.2000**
(21) Anmeldenummer: 96931741.1
(22) Anmeldetag: 31.07.1996
(51) Int. Cl.: B66C 1/66, B60P 7/08

(54) **ANSCHLUSSVORRICHTUNG FÜR ANSCHLAGMITTEL**
CONNECTOR FOR SLING DEVICES
DISPOSITIF DE RACCORDEMENT POUR MOYENS D'ACCROCHAGE

(30) Priorität: 03.08.1995 DE 19530166
(43) Veröffentlichungstag der Anmeldung: 20.05.1998
(73) Patentinhaber: RUD-KETTENFABRIK RIEGER & DIETZ GMBH U. CO., 73432 Aalen (DE)
(72) Erfinder: HAKER, Ulrich, D-73431 Aalen (DE)
(74) Vertreter: Böning, Manfred, Prof.Dr.-Ing.
(86) Internationale Anmeldenummer: DE9601481
(87) Internationale Veröffentlichungsnummer: WO9706092

(56) Entgegenhaltungen:
- EP-A- 0 179 733
- DE-A- 3 301 960
- DE-C- 3 509 877
- DE-C- 3 803 248
- DE-U- 8 618 070
- DE-U- 29 513 183
- FR-A- 1 534 833

## Beschreibung

Die Erfindung betrifft eine Anschlußvorrichtung für Anschlagmittel, insbesondere Anschlagketten, mit mindestens einem Befestigungsteil zum Anbringen der Vorrichtung an einem Fahrzeug, einem zu transportierenden Gegenstand oder dergleichen und mit einem Anschlußteil zum Anschließen des Anschlagmittels, wobei das Befestigungsteil ein nach Art eines Bügels ausgebildetes Lager für das um eine Schwenkachse schwenkbare Anschlußteil bildet und zum Zusammenhalten des Befestigungsteiles und des Anschlußteiles eine Klemmfeder dient, die einen Abschnitt des Anschlußteiles partiell umgreift und mit Halteschenkeln zu ihrer Arretierung im Befestigungsteil versehen ist.

Eine Anschlußvorrichtung der vorstehenden Art ist aus der DE-C-3509877 bekannt. Bei der bekannten Anschlußvorrichtung wird die im wesentlichen omegaförmig ausgebildete Klemmfeder durch in Rastnuten an der Innenseite eines annähernd U-förmigen Befestigungsteiles eingerastete Enden ihrer Halteschenkel im Befestigungsteil gehalten. Das Joch der Feder liegt dabei auf der gleichen Seite der Schwenkachse des Anschlußteiles wie das Joch des Befestigungsteiles. Diese Anordnung ermöglicht es, zunächst die Feder in das Befestigungsteil einzusetzen und anschließend die Schwenkachse des Anschlußteiles in den von den Halteschenkeln und dem Joch der Feder gebildeten Federbügel hineinzudrücken. Die bekannte Vorrichtung vermag insofern nicht voll zu befriedigen, als die Anordnung und Form ihrer Klemmfeder keine absolute Gewähr für den Zusammenhalt der aus dem Anschlußteil und dem Befestigungsteil gebildeten Einheit während des Transportes und der häufig "rauhen" Behandlung vor dem endgültigen Einbau bieten. Versuche, dem Problem dadurch Herr zu werden, daß man die Steifigkeit der Feder erhöht, haben zu keinem befriedigenden Ergebnis geführt, da mit der Erhöhung der Federsteifigkeit gleichzeitig das Zusammenfügen der Bauteile erschwert wird.

Der Erfindung liegt die Aufgabe zugrunde, eine Anschlußvorrichtung der in Betracht gezogenen Art so umzugestalten, daß sich ihre Teile nicht nur bequemer als bisher zusammenfügen lassen, sondern daß darüber hinaus ein sicherer Zusammenhalt der Teile auch unter schwierigen Bedingungen gewährleistet ist. Diese Aufgabe wird bei einer gattungsgemäßen Vorrichtung erfindungsgemäß dadurch gelöst, daß das Befestigungsteil an seiner Innenseite mit einer an ihren Enden durch Anschläge begrenzten halbringförmigen Nut zur Aufnahme der Halteschenkel der Klemmfeder versehen ist, daß die Klemmfeder die Schwenkachse - von einem dem Scheitel der Nut zugewandten Abschnitt abgesehen - umgreift und daß sich die Enden der vom Scheitel der Nut weggerichteten, in die Nut greifenden Halteschenkel der Klemmfeder unter Bildung einer formschlüssigen Halterung für das Anschlußteil gegen die Anschläge abstützen.

Bei der erfindungsgemäßen Anschlußvorrichtung sind die im Zusammenhang mit der bekannten Anschlußvorrichtung auftretenden Probleme eliminiert. Anschlußteil und Befestigungsteil bilden eine unverlierbare, werkseitig vormontierte Einheit. Sowohl die Klemmfeder als auch die sie aufnehmende Nut lassen sich aufgrund ihrer einfachen Form besonders wirtschaftlich herstellen. Beim Zusammenbau von Befestigungs- und Anschlußteil wird zunächst die Klemmfeder nach Art eines Clips auf die Schwenkachse des Befestigungsteiles aufgesetzt und danach die Schwenkachse zusammen mit der Klemmfeder in das Anschlußteil gedrückt, wobei die lediglich einmal umgebogenen Enden der Klemmfeder in der Nut zu liegen kommen.

Weitere Einzelheiten und Merkmale der Erfindung ergeben sich aus den Unteransprüchen und der nachfolgenden Beschreibung einer in der beigefügten Zeichnung dargestellten, bevorzugten Ausführungsform. Es zeigen:
Fig. 1 teilweise im Schnitt die Vorderansicht einer Anschlußvorrichtung,
Fig. 2 einen Schnitt längs der Linie II-II in Fig. 1 und
Fig. 3 die Art und Weise, wie die in den Figuren 1 und 2 dargestellten Teile zusammengefügt werden.

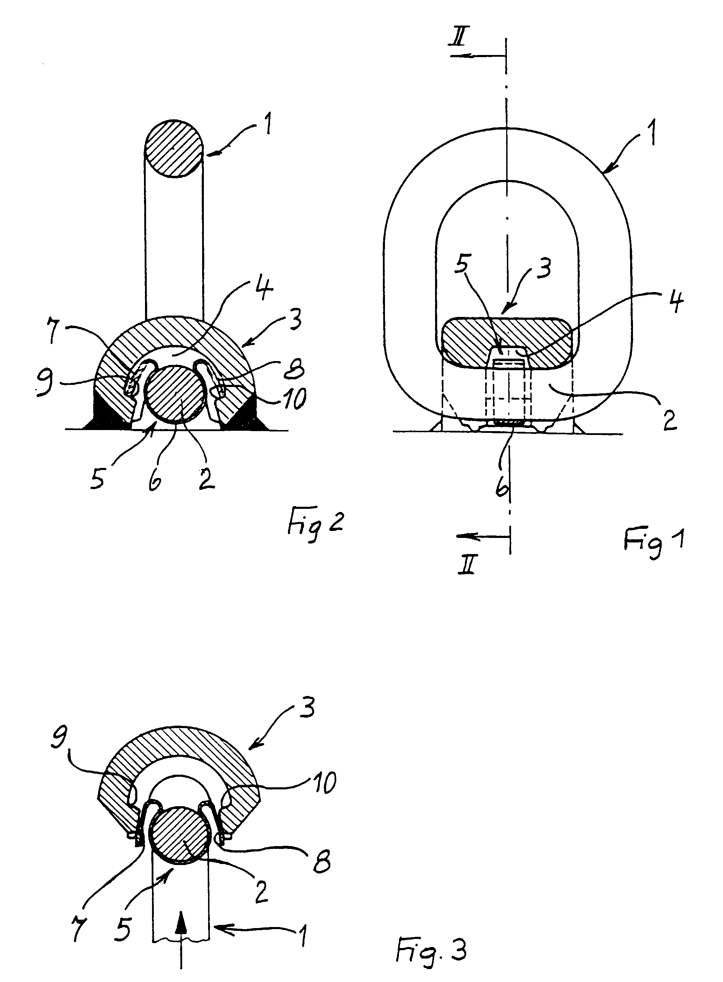

In den Figuren ist 1 ein ösenförmiges Anschlußteil mit einem eine Schwenkachse 2 bildenden geraden Abschnitt. Das Anschlußteil 1 ist schwenkbar in einem Befestigungsteil 3 gelagert, das von einem im wesentlichen U-förmigen Bügel gebildet wird. An der Innenseite des Befestigungsteiles 3 befindet sich eine halbringförmige Nut 4 zur Aufnahme einer Klemmfeder 5, die einen die Schwenkachse 2 umschließenden Abschnitt 6 und zwei sich hieran anschließende, durch einfaches Umbiegen gebildete Halteschenkel 7 und 8 aufweist. Wie aus Figur 2 erkennbar, liegen die Enden der annähernd geraden Halteschenkel 7 und 8 der Klemmfeder 5 gegen die die Anschläge 9 und 10 formenden Stirnwände der Nut 4 an und bilden zusammen mit dem Abschnitt 6 eine formschlüssige Halterung für die Schwenkachse 2 des Anschlußteiles 1. Aufgrund der für die Klemmfeder 5 gewählten Form erreicht man eine sichere, ohne Zerstörung der Klemmfeder 5 nicht mehr lösbare Verankerung des Anschlußteiles 1 im Befestigungsteil 3.

Das Zusammenfügen der Teile ist einfach, da sowohl die beim Aufstecken der Klemmfeder 5 auf die Schwenkachse 2 als auch die beim Einführen der mit der Klemmfeder 5 versehenen Schwenkachse 2 in das Befestigungsteil 3 zu überwindenden Federkräfte aufgrund der Form der Feder gering gehalten werden können, ohne daß hierdurch die Festigkeit der Verbindung beeinträchtigt wird. Die Art des Zusammenfügens ist in Figur 3 dargestellt. Man erkennt, daß das Anschlußteil 1 zusammen mit der Klemmfeder 5 von unten in das Befestigungsteil gedrückt und danach um mindestens 90° geschwenkt wird. Die Länge der Halteschenkel 7 und 8 der Klemmfeder ist bei der beschriebenen Ausführungsform annähernd gleich dem Durchmesser der Schwenkachse 2. Sie sollte mindestens gleich dem halben Durchmesser der Schwenkachse sein.

## Patentansprüche

1. Anschlußvorrichtung für Anschlagmittel, insbesondere Anschlagketten, mit mindestens einem Befestigungsteil zum Anbringen der Vorrichtung an einem Fahrzeug, einem zu transportierenden Gegenstand od. dgl. und mit einem Anschlußteil zum Anschließen des Anschlagmittels, wobei das Befestigungsteil ein nach Art eines Bügels ausgebildetes Lager für das um eine Schwenkachse schwenkbare Anschlußteil bildet und zum Zusammenhalten des Befestigungsteiles und des Anschlußteiles eine Klemmfeder dient, die einen Abschnitt des Anschlußteiles partiell umgreift und mit Halteschenkeln zu ihrer Arretierung im Befestigungsteil versehen ist, **dadurch gekennzeichnet**, daß das Befestigungsteil (3) an seiner Innenseite mit einer an ihren Enden durch Anschläge (9,10) begrenzten halbringförmigen Nut (4) zur Aufnahme der Halteschenkel (7,8) der Klemmfeder (5) versehen ist, daß die Klemmfeder (5) die Schwenkachse (2) - von einem dem Scheitel der Nut (4) zugewandten Abschnitt abgesehen - umgreift und daß sich die Enden der vom Scheitel der Nut (4) weggerichteten, in die Nut (4) greifenden Halteschenkel (7,8) der Klemmfeder (5) unter Bildung einer formschlüssigen Halterung für das Anschlußteil (1) gegen die Anschläge (9,10) abstützen.

2. Anschlußvorrichtung nach Anspruch 1, **dadurch gekennzeichnet**, daß das Befestigungsteil (3) als U-Bügel und das Anschlußteil (1) als Öse ausgebildet ist.

3. Anschlußvorrichtung nach Anspruch 1 oder 2, **dadurch gekennzeichnet**, daß die Halteschenkel (7,8) der Klemmfeder (5) annähernd gerade ausgebildet sind und mit ihren Stirnseiten gegen die Anschläge (9,10) anliegen.

4. Anschlußvorrichtung nach einem oder mehreren der Ansprüche 1 bis 3, **dadurch gekennzeichnet**, daß die Länge der Halteschenkel (7,8) der Klemmfeder (5) mindestens gleich dem halben Durchmesser der Schwenkachse (2) des Anschlußteiles (1) ist.

## Claims

1. A connecting device for fixing means, especially sling chains, having at least one fastening part for fitting the device to a vehicle, an object to be transported or the like, and having a connecting part for connecting the fixing means, the fastening part forming a bearing, constructed in the manner of a stirrup, for the connecting part, which can pivot about a pivot section, and a clamping spring, which partially engages around a section of the connecting part and is provided with retaining legs to lock it in the fastening part, being used to hold the fastening part and the connecting part together, wherein the fastening part (3) is provided on its inner side with a semiannular groove (4), which is bounded at its ends by stops (9, 10) and is intended to accommodate the retaining legs (7, 8) of the clamping spring (5), wherein the clamping spring (5) engages around the pivot section (2) - apart from a section facing the vertex of the groove (4) - and wherein the ends of the retaining legs (7, 8) of the clamping spring (5), said retaining legs being directed away from the vertex of the groove (4) and engaging in the groove (4), are supported against the stops (9,10), forming a positively locking retainer for the connecting part (1).

2. The connecting device as claimed in claim 1, wherein the fastening part (3) is constructed as a U-shaped stirrup and the connecting part (1) is constructed as an eye.

3. The connecting device as claimed in claim 1 or 2, wherein the retaining legs (7, 8) of the clamping spring (5) are of approximately rectilinear construction and rest with their front sides against the stops (9, 10).

4. The connecting device as claimed in one or more of claims 1 to 3, wherein the length of the retaining legs (7, 8) of the clamping spring (5) is at least equal to half the diameter of the pivot section (2) of the connecting part (1).

## Revendications

1. Dispositif de raccordement pour moyens d'assemblage, en particulier pour chaîne de butée, comprenant au moins un élément de fixation servant à fixer le dispositif à un véhicule, un objet à transporter ou analogue, et un élément de raccordement servant à raccorder le moyen de butée, dans lequel l'élément de fixation forme un palier réalisé à la façon d'un étrier pour l'élément de raccordement qui peut pivoter autour d'un axe de pivotement et, pour maintenir l'élément de fixation et l'élément de raccordement assemblés, il est prévu un ressort de serrage qui entoure partiellement un segment de l'élément de raccordement et qui est muni de branches de retenue servant à l'arrêter dans l'élément de fixation, caractérisé en ce que l'élément de fixation (3) est muni, sur son côté intérieur, d'une gorge (4) en forme de demi-anneau, limitée à ses extrémités par des butées (9, 10), et destinée à recevoir les branches de retenue (7, 8) du ressort de serrage (5), en ce que le ressort de serrage (5) entoure l'axe de pivotement (2) - à l'exception d'un segment dirigé vers le sommet de la gorge (4) - et en ce que les extrémités des branches de retenue (7, 8) du ressort de serrage (5), qui pointent à l'opposé du sommet de la gorge (4) et qui s'engagent dans la gorge (4), s'appuient contre les butées (9, 10) en formant une retenue agissant par sûreté de forme pour l'élément de raccordement (1).

2. Dispositif de raccordement selon la revendication 1, caractérisé en ce que l'élément de fixation (3) est réalisé sous la forme d'un étrier en U et l'élément de raccordement (1) est réalisé sous la forme d'une boucle.

3. Dispositif de raccordement selon la revendication 1 ou 2, caractérisé en ce que les branches de retenue (7, 8) du ressort de serrage (5) sont de forme approximativement rectiligne et sont en appui contre les butées (9, 10) par leurs côtés frontaux.

4. Dispositif de raccordement selon une ou plusieurs des revendications 1 à 3, caractérisé en ce que la longueur des branches de retenue (7, 8) du ressort de serrage (5) est au moins égale au rayon de l'axe de pivotement (2) de l'élément de raccordement (1).
